# EUROPEAN PATENT SPECIFICATION

(11) **EP 4 326 593 B1**
(45) Date of publication and mention of the grant of the patent: **21.10.2026**
(21) Application number: 22792478.4
(22) Date of filing: 21.04.2022
(51) Int. Cl.: B61B 3/02, B61B 3/00, B61B 5/00, B61B 7/00, A63G 21/20, A63G 21/22, E01B 25/16

(54) **SELF-PROPELLED ELEVATED TRANSPORTATION SYSTEM**
SELBSTANGETRIEBENES HOCHTRANSPORTSYSTEM
SYSTÈME DE TRANSPORT SURÉLEVÉ AUTOPROPULSÉ

(30) Priority: 22.04.2021 US 202163178314 P
(43) Date of publication of application: 28.02.2024
(73) Proprietor: Strunk, Jeffrey Loresch, Eustis, ME 04936 (US)
(72) Inventor: Strunk, Jeffrey Loresch, Eustis, ME 04936 (US)
(74) Representative: Fabiano, Piero
(86) International application number: PCT/US2022/025723
(87) International publication number: WO 2022/226165

(56) References cited:
- WO-A1-2019/084265
- WO-A1-2021/015630
- US-A- 3 353 503
- US-A1- 2008 121 133
- US-A1- 2013 125 778
- US-A1- 2014 116 282
- US-A1- 2020 324 654
- US-B1- 6 389 982
- US-B2- 7 124 692

## Description

### BACKGROUND OF THE INVENTION

### I. Cross-Reference to Related Applications

This application claims priority to U.S. Provisional Patent Application Serial No. 63/178,314, filed April 22, 2021,

### II. Field of the Invention

The present invention relates generally to self-propelled elevated lift transportation systems.

### III. General Background

Traditional elevated lift systems, such as ski lifts and cable cars, are used to transport riders between locations, frequently uphill, downhill, or above an area not suitable for ground transportation, such as an area with heavy snowfall or a body of water. While these traditional lift systems are effective in transporting users, these systems lack flexibility. Typical lift systems require a centralized power source, such as a wheel, to turn cable wires. Cable cars will be passively carried by the moving wire from one point to another via a linear cable segment. In order to change directions for a new branch of a cable line, a second power source would be needed to move a second cable on the new branch. Further, the entire system must be powered and operational even if user demand is only for a single car. Accordingly, what is needed is a more versatile and efficient elevated lift system. US2013/125778 discloses a traditional transportation system according to the generic state of the art.

### SUMMARY OF THE INVENTION

In accordance with embodiments of the invention, a lift car operable to travel along a track segment is provided. The lift car includes a chassis having an upper portion opposite a lower portion. An electric drive system is disposed on the upper portion of the chassis and is operable to move the lift car along the track segment. A control panel is operable to enable control the car. A power source is operable to power the drive mechanism. A sensor is operable to communicate with a remote device. The lower portion of the chassis is operable to carry a payload.

In accordance with embodiments of the invention, a method of elevated transportation is provided. The method includes a first step of providing a plurality of towers. The method includes a second step of connecting a plurality of track segments to the plurality of towers. The method includes a third step of providing a lift car. The method includes a fourth step of traveling, by operation of the lift car, from an origin to a destination along the plurality of track segments.

### BRIEF DESCRIPTION OF THE DRAWINGS

The foregoing and other objects, features, and advantages of the invention are apparent from the following detailed description taken in conjunction with the accompanying drawings in which like parts are given like reference numerals and, wherein:
**FIG. 1** illustrates a plan view of a self-propelled elevated transportation system in accordance with embodiments of the invention.
**FIG. 2** illustrates a front view of a tower of a self-propelled elevated transportation system in accordance with embodiments of the invention.
**FIG. 3** illustrates a top view of a portion of a tower of a self-propelled elevated transportation system in accordance with embodiments of the invention.
**FIG. 4** illustrates a front view of a lift car of a self-propelled elevated transportation system in accordance with embodiments of the invention.
**FIG. 5** illustrates a side view of a drive mechanism of a lift car of a self-propelled elevated transportation system in accordance with embodiments of the invention.
**FIG. 6** illustrates a front view of a drive mechanism of a lift car of a self-propelled elevated transportation system in accordance with embodiments of the invention.
**FIG. 7** illustrates a front view of a switch tower of a self-propelled elevated transportation system in accordance with embodiments of the invention.
**FIG. 8** illustrates a top view of a switch tower of a self-propelled elevated transportation system in accordance with embodiments of the invention.
**FIG. 9** illustrates a top view of a switch tower of a self-propelled elevated transportation system in accordance with embodiments of the invention.
**FIG. 10** illustrates a top view of a switch tower of a self-propelled elevated transportation system in accordance with embodiments of the invention.
**FIG. 11** illustrates a plan view of a self-propelled elevated transportation system operable for transporting a package in accordance with embodiments of the invention.

The images in the drawings are simplified for illustrative purposes and are not depicted to scale. Within the descriptions of the figures, similar elements are provided similar names and reference numerals as those of the previous figure(s). The specific numerals assigned to the elements are provided solely to aid in the description and are not meant to imply any limitations (structural or functional) on the invention.

The appended drawings illustrate exemplary configurations of the invention.

### DETAILED DESCRIPTION

The embodiments of the disclosure will be best understood by reference to the drawings, wherein like parts are designated by like numerals throughout.

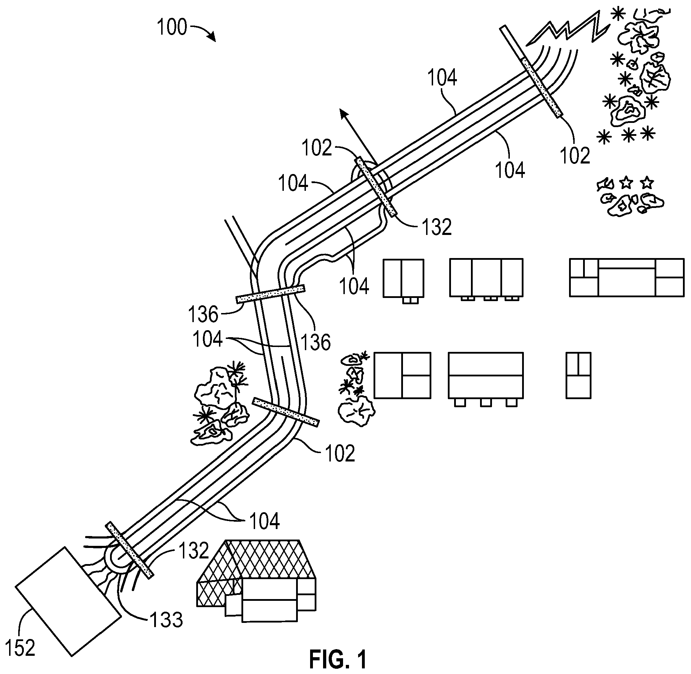

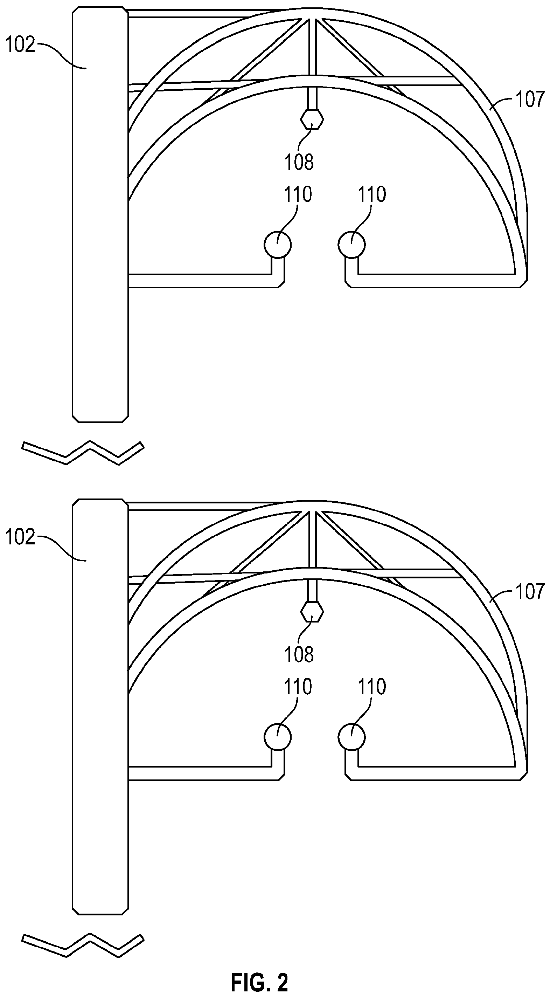

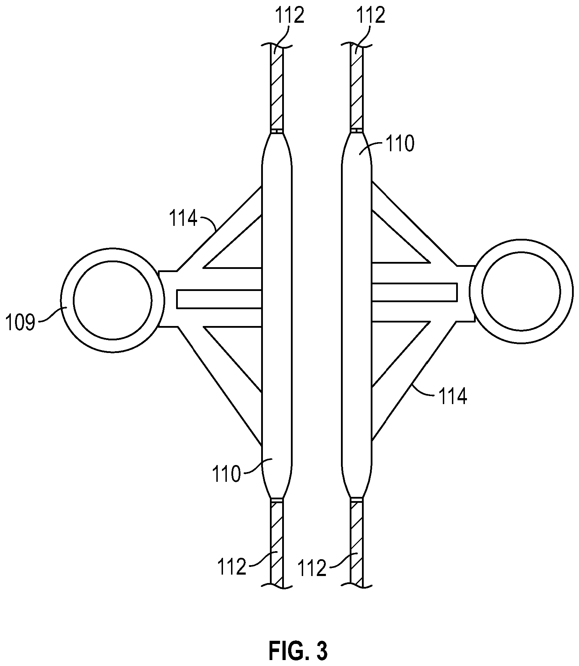

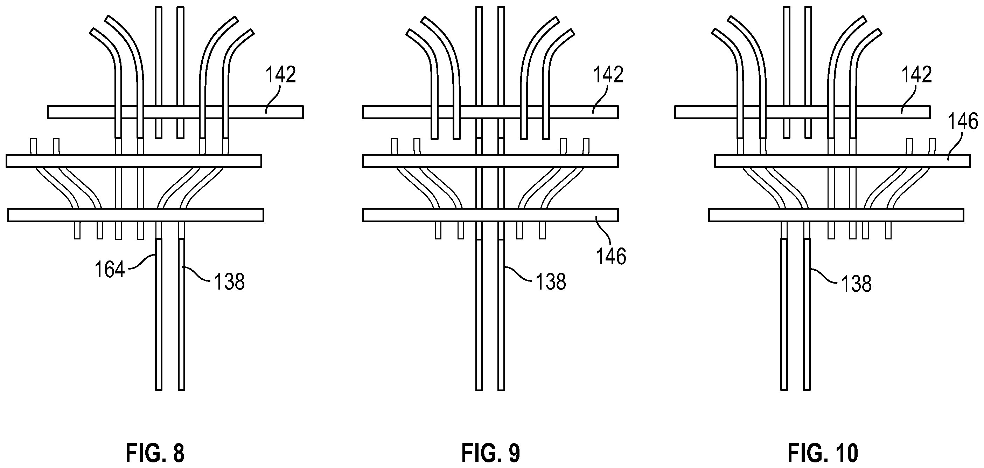

In accordance with embodiments of the invention, a self-propelled elevated transportation system **100** is provided, as illustrated in **FIGS. 1-11****.** **FIG. 1** illustrates an exemplary track pattern of the self-propelled elevated transportation system **100.** The self-propelled elevated transportation system **100** includes a plurality of towers **102.** Each of the plurality of towers **102** is operable to receive and connect one or more track segments **104.** The towers **102** are operable for a lift car **106** to move along the one or more track segments **104.** The plurality of track segments **104** is operable to connect the plurality of towers **102.** As illustrated in the Figures, the track segments **104** are a fixed pair of cables **112.** In some embodiments, the track segments **104** are a single cable, a plurality of cables, or a fixed light rail, for example. The track segments **104** may include a heating core or heating element to melt snow and ice buildup on the track segments **104.** As illustrated in **FIG. 2****,** each tower **102** includes a cantilever arm **107.** A tower sensor **108** is connected to the cantilever arm **107.** The sensor **108** is operable to detect the presence, speed, and other metrics of a lift car **106** passing through the tower **102.** Cable rail sleeves **110** are operable to receive and secure or encompass cables **112** to create a continuous track through the tower **102** to enable a lift car **106** to pass through the tower **102.** As illustrated in **FIG. 3****,** braces **114** are operable to provide stability to cables **110.** A tower bracket **109** is operable to connect to the tower **102** or the cantilever arm **107,** for example. In some embodiments, the braces **114** are operable to enable the cables **110** to curve laterally, ascend, or descend. An aerial return tower **133** is operable to enable a 180 degree turn. Embodiments of the invention are operable for use along ski slopes, enabling lift cars **106** to travel up and down slopes, travel to buildings, such as charging houses, lodges, condos, homes, or any other destination connected by the system **100.** Embodiments of the towers **102** include a telescoping feature operable to elevate the cantilever arm **107,** thereby increasing the ground clearance, which is useful after snow buildup. Each tower **102** of the system **100** is operable to simultaneously telescope to uniformly elevate the tracks segments **104.** In some embodiments, the cantilever arm **107** and tower brackets **109** are operable to move as an assembly relative to a fixed tower **102** to elevate the track segments **104.** The combined assembly may be elevated telescopically, hydraulically, by a motor, or by ratcheting, for example. Embodiments of the system **100** are further operable for zero gravity applications, such as bases on moons, planets, or space stations, enabling travel by cable rather than requiring pilots to dock jets.

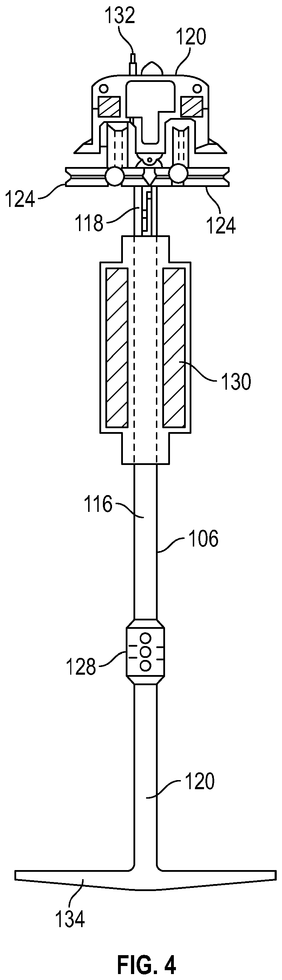

As illustrated in **FIGS. 4-6****,** one or more lift cars **106** are operable to move along the plurality of track segments **104.** The lift car **106** includes a chassis **116** having an upper portion **118** opposite a lower portion **120.** A drive mechanism **122** is disposed on the upper portion **118** of the chassis **116.** The drive mechanism **122** is operable to move the lift car **106** along a lift track **104.** In the embodiment illustrated in the Figures, the drive mechanism **122** is an electric drive system, for example a pair of electric motors, operable to drive a pair of drive pulleys **124** and a pair of stabilizer pulleys **126** to act as a pinch system. Some embodiments may use gas or diesel powered motors, for example. The pulleys **124** and **126** are operable to drive and stabilize the lift car **106** along the cables **112.** A control panel **128** is operable to enable a rider to control the lift car **106.** The control panel **128** may include switches, push buttons, or touch screen controls to start and stop, adjust a throttle, select the speed, enable remote control, dispatching, or select a destination in the system **100,** for example. This provides an advantage over the prior art by enabling independent control of a single car moving throughout the elevated transportation system **100,** as prior art cars are pulled by a cable controlled in a central location for the entire system, preventing cars from moving independently. A power source **130** is operable to power the drive mechanism **122.** As illustrated in the Figures, power source **130** is a rechargeable battery, which may be fixed, removable, or charged by induction braking or solar power, for example. A solar panel may be included on the lift car **106** to power the lift car **106** or charge the rechargeable battery, for example. Alternate power sources may include wireless power, ion propulsion, or fuel cells. In embodiments incorporating petroleum powered motors, the power source **130** is a fuel tank. Embodiments utilizing electric battery powered motors are advantageous, as fossil fuel motors are typically heavier and fuel tanks must be refilled frequently. Fossil fuel motors emit carbon dioxide fumes, which is hazardous in an enclosed building, such as station, storage facility, or a warehouse. In some embodiments, the cables **112** will provide electricity and the lift car **106** will incorporate an electrical connection to connect to the power. A car sensor **132** is operable to connect to the tower sensor **128** to enable slowing, starting, returning, stopping, return to skier speed, or to send the car to a new destination, for example. The lower portion **120** of the lift car **106** is operable to carry a payload, such as a rider, equipment, or a package, for example. As illustrated, a t-bar **134** is disposed on the lower portion **120** of the chassis **116** and is operable for a user to be pulled by the lift car **106** or to sit on the lift car **106.** In some embodiments, lower portion **120** contains a seat capable of accommodating one or more persons, an equipment basket, or any other attachment capable of facilitating the transport of people, equipment, or supplies. Embodiments of the lift car **106** may include a light, such as an LED light, to illuminate the pathway in front of the lift car **106,** speakers to play music, WiFi hotspots, or connections to enable riders to charge cellular phones or other devices.

In some embodiments, the lift car **106** is controlled by a software application operable to communicate wirelessly with the control panel **128.** The software application enables an operator to load and schedule destinations, to display metrics of the lift car **106,** such as remaining battery life, temperature, and operational data required to detect maintenance issues. The software application allows the operator to control one or more lift cars **106,** such as speed, reverse, forward, go to charging station, stop, slow, etc.

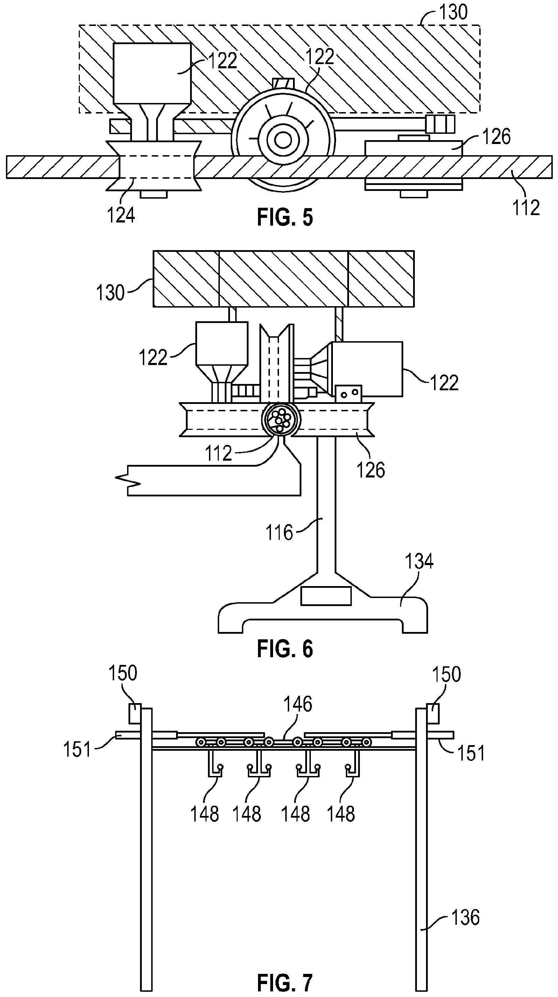

In accordance with embodiments of the invention, a switch tower **136** is provided, as illustrated in **FIGS. 7-10**. The switch tower **136** includes a single track port **138** disposed on a first side of the tower **136.** The single track port **138** is operable to connect to a track segment **104** of the elevated transportation system **100.** A multiple track port **142** is disposed on a second side of the tower **136.** The multiple track port **142** has a plurality of track ports operable to connect to one or more track segments **104.** A rail switch cage **146** is disposed on the switch tower **136** between the single track port **138** and the multiple track port **142.** A plurality of switch track segments **148** is disposed within the rail switch cage **146.** Each of the plurality of switch track segments **148** is operable to connect the single track port to a track port of the multiple track port **142.** The switch tower **136** includes a rail switch cage drive mechanism **137,** such as an electric hydraulic motor **150** and piston arm **151,** for moving the rail switch cage **146** relative to the single track port **138** and the multiple track port **142** to selectively align one of the plurality of switch track segments **148** with the single track port **138** and a track port contained within the multiple track port **142.** By moving the rail switch cage **146** relative to the ports **138** and **142,** the switch tower **136** enables a car **106** to selectively switch from one track to three tracks, or from one of the three tracks to a single track, by moving the rail switch cage **146** to create a continuous track. Embodiments may have two, four, or another number of switch track segments **148** depending on the application. In an alternative embodiment, system **100** can employ any switching mechanism known in the art; for example, any switching mechanism used on fixed rail systems.

As illustrated in **FIG. 1****,** embodiments of the system **100** enable lift transportation in directions other than a straight line, as the lift cars **106** are self-propelled rather than moved by a moved cable. This enables construction of the system **100** around specific objects, such as trees, mountains, hills, or buildings. Switch towers **136** enable the construction of spur lines to various destinations, stations, or an individual's home. A charging house **152** may house multiple cars **106** and charge the power sources **130** of each car while in the charging house **152.** Embodiments of the system **100** reduce the environmental impact. The route of system **100** is operable to be constructed to avoid obstacles and to utilize a narrower right of way than a traditional lift mechanism, thereby reducing the amount of vegetation needing to be cleared.

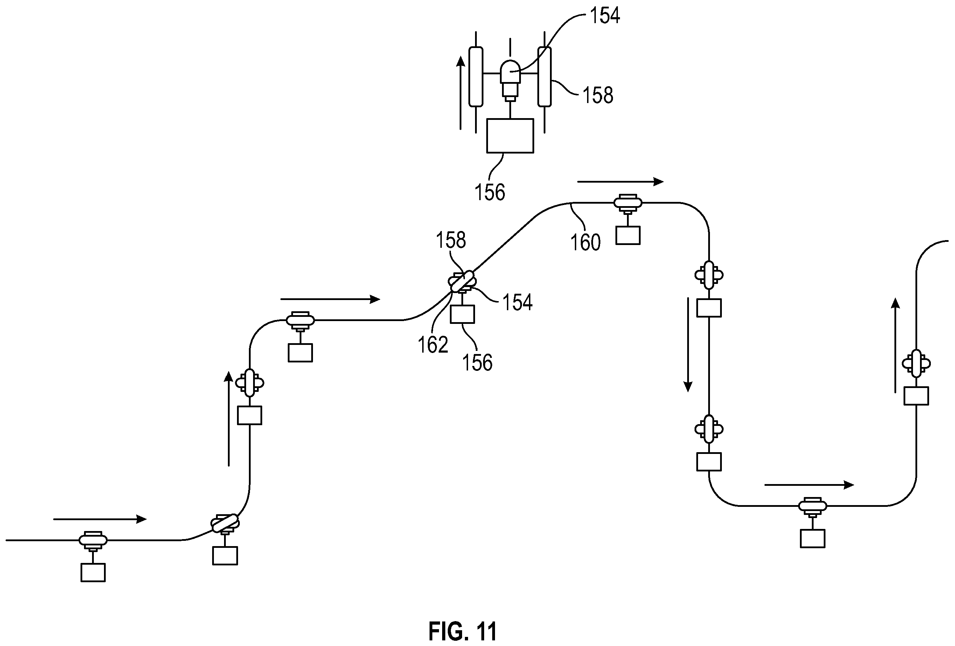

Referring to the embodiment illustrated in **FIG. 11****,** the self-propelled elevated transportation system **100** is operable to transport packages in a warehouse. A package lift car **153** includes a rotating gear box **154,** which is operable to act as a gimble, to enable a package carrier **156** to hang from the drivetrain **158** to travel along cables **160.** A cowling **162** contains components of the drivetrain, such as wheels. A clearance, such as six inches, for example, enables clearance for a package to be carried without contacting the cables. The package carrier **156** may carry a utility cart, a platform, personnel, or a robot. In one embodiment, the robot will include artificial intelligence capabilities to autonomously fill orders by utilizing a camera to read UPC codes for destinations, as well as include functionality for picking up a package or a product, for example. The software application enables an operator to load and schedule destinations within a warehouse, automatically accept an order from the internet retailer, and automatically go to the destination within the warehouse containing the product to fill the order. Embodiments incorporating multiple lines of track segments **104** may be configured for the lines of track segments **104** to run side by side or configured to be stacked vertically, as illustrated in **FIG. 2****.**

For the purposes of promoting an understanding of the principles of the invention, reference has been made to the preferred embodiments illustrated in the drawings, and specific language has been used to describe these embodiments.

## Claims

1. A lift car (106) operable to travel along a track segment, comprising:
a chassis (116) having an upper portion (118) opposite a lower portion (120);
an electric drive system comprising one or more electric motors and disposed on the upper portion (118) of said chassis (116), said electric drive system operable to move said lift car (106) along said track segment (104);
a control panel operable to enable control said car;
a power source (130) operable to power said drive mechanism;
a sensor operable to communicate with a remote device; and
wherein said lower portion of said chassis is operable to carry a payload;
**characterized in that**:
said electric drive system further comprises one or more drive pulleys and one or more stabilizer pulleys,
said one or more electric motors are operable to drive said one or more drive pulleys, and
said one or more stabilizer pulleys are operable to pinch cables of a track segment.

2. The lift car (106) of claim 1, wherein the power source (130) is a rechargeable battery.

3. The lift car (106) of claim 1, wherein the power source (130) is a wireless charging.

4. The lift car (106) of claim 1, further comprising a solar panel, said solar panel operable to charge the power source.

5. The lift car (106) of claim 1, wherein the control panel is operable to enable a rider to control the car.

6. The lift car (106) of claim 1, wherein the control panel is operable to enable remote control of the car.

7. The lift car (106) of claim 1, wherein the payload is a rider.

8. The lift car (106) of claim 1, further comprising a lift car sensor operable to enable said lift car to slow, start, return, stop, return to skier speed, or to send said lift car to a destination.

9. A method of elevated transportation, comprising:
providing a plurality of towers (102);
connecting a plurality of track segments (104) to said plurality of towers (102);
providing a lift car (106); and
traveling, by operation of said lift car, from an origin to a destination along said plurality of track segments (104); and
wherein said lift car is powered by an electric drive mechanism, said electric drive mechanism comprising:
one or more electric motors:
one or more drive pulleys;
one or more stabilizer pulleys; and
wherein said one or more electric motors are operable to drive said one or more drive pulleys and said one or more stabilizer pulleys are operable to pinch cables of a track segment (104).

10. The method of claim 9, wherein said lift car (106) is remote controlled.

11. The method of claim 9, wherein said lift car (106) is controlled by an onboard control panel.

## Patentansprüche

1. Liftkabine (106), die dazu ausgelegt ist, sich entlang eines Streckenabschnitts zu bewegen, umfassend:
ein Fahrgestell (116) mit einem oberen Abschnitt (118) gegenüber einem unteren Abschnitt (120);
ein elektrisches Antriebssystem, das einen oder mehrere Elektromotoren umfasst und am oberen Abschnitt (118) des Fahrgestells (116) angeordnet ist, wobei das
elektrische Antriebssystem dazu ausgelegt ist, die Liftkabine (106) entlang des Streckenabschnitts (104) zu bewegen;
ein Bedienfeld, das dazu ausgelegt ist, die Steuerung der Kabine zu ermöglichen;
eine Energiequelle (130), die dazu ausgelegt ist, den Antriebsmechanismus mit Energie zu versorgen;
einen Sensor, der dazu ausgelegt ist, mit einer entfernten Vorrichtung zu kommunizieren; und
wobei der untere Abschnitt des Fahrgestells dazu ausgelegt ist, eine Nutzlast zu tragen;
**dadurch gekennzeichnet, dass**:
das elektrische Antriebssystem ferner eine oder mehrere Antriebsrollen und eine oder mehrere Stabilisierungsrollen umfasst,
der eine oder die mehreren Elektromotoren dazu ausgelegt sind, die eine oder die mehreren Antriebsrollen anzutreiben, und
die eine oder die mehreren Stabilisierungsrollen dazu ausgelegt sind, Seile eines Streckenabschnitts einzuklemmen.

2. Liftkabine (106) nach Anspruch 1, wobei die Energiequelle (130) eine wiederaufladbare Batterie ist.

3. Liftkabine (106) nach Anspruch 1, wobei die Energiequelle (130) für kabelloses Laden ausgelegt ist.

4. Liftkabine (106) nach Anspruch 1, ferner umfassend ein Solarmodul, wobei das Solarmodul dazu ausgelegt ist, die Energiequelle aufzuladen.

5. Liftkabine (106) nach Anspruch 1, wobei das Bedienfeld dazu ausgelegt ist, es einem Fahrgast zu ermöglichen, die Kabine zu steuern.

6. Liftkabine (106) nach Anspruch 1, wobei das Bedienfeld dazu ausgelegt ist, eine Fernsteuerung der Kabine zu ermöglichen.

7. Liftkabine (106) nach Anspruch 1, wobei die Nutzlast ein Fahrgast ist.

8. Liftkabine (106) nach Anspruch 1, ferner umfassend einen Liftkabinensensor, der dazu ausgelegt ist, es der Liftkabine zu ermöglichen, zu verlangsamen, zu starten, zurückzukehren, anzuhalten, zur Skifahrergeschwindigkeit zurückzukehren oder zu einem Zielort zu fahren.

9. Verfahren für ein Hochtransportsystem, umfassend: Bereitstellen einer Vielzahl von Masten (102);
Verbinden einer Vielzahl von Schienensegmenten (104) mit der Vielzahl von Masten (102); Bereitstellen einer Transportkabine (106); und
Fahren von einem Ausgangspunkt zu einem Zielort entlang der Vielzahl von Schienensegmenten (104) durch Betreiben der Transportkabine; und
wobei die Transportkabine von einem elektrischen Antriebsmechanismus angetrieben wird, wobei der elektrische Antriebsmechanismus Folgendes umfasst:
einen oder mehrere Elektromotoren;
eine oder mehrere Antriebsscheiben;
eine oder mehrere Stabilisierungsscheiben; und
wobei der eine oder die mehreren Elektromotoren dazu betreibbar sind, die eine oder die mehreren Antriebsscheiben anzutreiben, und die eine oder die mehreren Stabilisierungsscheiben dazu betreibbar sind, Kabel eines Schienensegments (104) einzuklemmen.

10. Verfahren nach Anspruch 9, wobei die Transportkabine (106) ferngesteuert wird.

11. Verfahren nach Anspruch 9, wobei die Transportkabine (106) über ein an Bord befindliches Bedienfeld gesteuert wird.

## Revendications

1. Une cabine de remontée mécanique (106) conçue pour se déplacer le long d'un tronçon de voie, comprenant:
un châssis (116) présentant une partie supérieure (118) opposée à une partie inférieure (120);
un système d'entraînement électrique comprenant un ou plusieurs moteurs électriques et disposé sur la partie supérieure (118) dudit châssis (116), ledit système d'entraînement électrique étant conçu pour déplacer ladite cabine (106) le long dudit tronçon de voie (104);
un panneau de commande conçu pour permettre de commander ladite cabine;
une source d'énergie (130) conçue pour alimenter ledit mécanisme d'entraînement;
un capteur conçu pour communiquer avec un dispositif distant; et
dans laquelle ladite partie inférieure du châssis est conçue pour transporter une charge utile;
**caractérisée en ce que**:
ledit système d'entraînement électrique comprend en outre une ou plusieurs poulies motrices et une ou plusieurs poulies de stabilisation,
ledit ou lesdits moteurs électriques sont conçus pour entraîner ladite ou lesdites poulies motrices, et
ladite ou lesdites poulies de stabilisation sont conçues pour pincer des câbles d'un tronçon de voie.

2. La cabine (106) selon la revendication 1, dans laquelle la source d'énergie (130) est une batterie rechargeable.

3. La cabine (106) selon la revendication 1, dans laquelle la source d'énergie (130) est un dispositif de recharge sans fil.

4. La cabine (106) selon la revendication 1, comprenant en outre un panneau solaire, ledit panneau solaire étant conçu pour charger la source d'énergie.

5. La cabine (106) selon la revendication 1, dans laquelle le panneau de commande est conçu pour permettre à un passager de commander la cabine.

6. La cabine (106) selon la revendication 1, dans laquelle le panneau de commande est conçu pour permettre une commande à distance de la cabine.

7. La cabine (106) selon la revendication 1, dans laquelle la charge utile est un passager.

8. La cabine (106) selon la revendication 1, comprenant en outre un capteur de cabine conçu pour permettre à ladite cabine de ralentir, démarrer, revenir en arrière, s'arrêter, revenir à une vitesse adaptée aux skieurs ou d'envoyer ladite cabine vers une destination.

9. Procédé de transport aérien, comprenant : la mise en place d'une pluralité de pylônes (102);
le raccordement d'une pluralité de tronçons de voie (104) à ladite pluralité de pylônes (102); la mise à disposition d'une cabine (106); et
le déplacement, par actionnement de ladite cabine, d'une origine vers une destination le long de ladite pluralité de tronçons de voie (104); et
dans lequel ladite cabine est entraînée par un mécanisme d'entraînement électrique, ledit mécanisme d'entraînement électrique comprenant:
un ou plusieurs moteurs électriques;
une ou plusieurs poulies motrices;
une ou plusieurs poulies de stabilisation; et
dans lequel ledit ou lesdits moteurs électriques sont aptes à entraîner ladite ou lesdites poulies motrices et ladite ou lesdites poulies de stabilisation sont aptes à serrer des câbles d'un tronçon de voie (104).

10. Procédé selon la revendication 9, dans lequel ladite cabine (106) est télécommandée.

11. Procédé selon la revendication 9, dans lequel ladite cabine (106) est commandée par un panneau de commande embarqué.
